# EUROPÄISCHE PATENTSCHRIFT

(11) **EP 4 597 041 B1**
(45) Veröffentlichungstag und Bekanntmachung des Hinweises auf die Patenterteilung: **31.12.2025**
(21) Anmeldenummer: 24154781.9
(22) Anmeldetag: 30.01.2024
(51) Int. Cl.: G01D 5/244

(54) **VORRICHTUNG UND VERFAHREN ZUR POSITIONS-, LÄNGEN- ODER WINKELBESTIMMUNG**
DEVICE AND METHOD FOR DETERMINING POSITION, LENGTH OR ANGLE
DISPOSITIF ET PROCÉDÉ DE DÉTERMINATION DE POSITION, DE LONGUEUR OU D'ANGLE

(43) Veröffentlichungstag der Anmeldung: 06.08.2025
(73) Patentinhaber: SICK AG, 79183 Waldkirch (DE)
(72) Erfinder: SELLMER, Christian, 78166 Donaueschingen (DE); HIRMER, Katrin, 78166 Donaueschingen (DE)
(74) Vertreter: Manitz Finsterwald Patent- und Rechtsanwaltspartnerschaft mbB

(56) Entgegenhaltungen:
- EP-A1- 4 242 595
- DE-C1- 19 747 753
- JP-A- 2015 090 306
- US-B2- 9 285 245

## Beschreibung

Die vorliegende Erfindung betrifft eine Vorrichtung zur Positions-, Längen- oder Winkelbestimmung sowie ein entsprechendes Verfahren. Als Stand der Technik sei auf die EP 4 242 595 A1, die US 9 285 245 B2, die JP 2015 090306 A und die DE 197 47 753 C1 verwiesen.

Vorrichtungen zur Positions-, Längen- oder Winkelbestimmung, die auch als Encoder bezeichnet werden, sowie entsprechende Verfahren können in einer Vielzahl von technischen Bereichen eingesetzt werden. Beispielsweise können solche Vorrichtungen in Werkzeugmaschinen Verwendung finden, wobei eine Positions- oder Winkelmessung eines Werkzeugs relativ zu dem Werkstück ermöglicht wird. Andere Einsatzbereiche sind Drehwinkelsensoren, beispielsweise für Motor-Feedback-Systeme.

Herkömmlicher Weise umfassen solche Vorrichtungen einen ersten und einen zweiten Teil, welche relativ zueinander bewegbar sind. An dem ersten Teil ist eine Codierung mit einer Vielzahl von Codeabschnitten erster Art und zweiter Art angebracht. An dem zweiten Teil ist eine Auslesevorrichtung zur Erfassung zumindest eines Teils der Codierung angebracht. Die Auslesevorrichtung umfasst mehrere Sensoren, welche jeweils zur Erfassung der einzelnen Codeabschnitte und zur Ausgabe eines entsprechenden analogen Messsignals ausgebildet sind. Entsprechende Vorrichtungen umfassen regelmäßig auch einen Analog-Digital-Umsetzer sowie eine Auswerteinheit. Der Analog-Digital-Umsetzer ist dazu ausgebildet, das Messsignal von wenigstens einem der Sensoren anhand eines Abgleichs einzelner Messwerte des Messsignals mit einer Mehrzahl von unterschiedlichen Referenzwerten, insbesondere von Referenzwerten einer einzelnen Art, zu digitalisieren. Die Auswerteinheit ist dazu ausgebildet, aus dem bzw. den digitalisierten Messsignal(en) eine Relativposition zwischen dem ersten und dem zweiten Teil zu ermitteln.

Zur Digitalisierung erfolgt dabei stets ein Abgleich jedes einzelnen Messwerts des Messsignals mit der Gesamtheit von Referenzwerten, welche zur umfassenden Digitalisierung des Messsignals notwendig sind. Konkret liegen alle zu erwartenden Messwerte für jede einzelne Relativposition in einem zusammenhängenden Bereich zwischen einem Maximalwert und einem Minimalwert. Über die Gesamtheit dieser Amplitude hinweg sind je nach gewünschter Auflösung eine Vielzahl von Referenzwerten definiert, welche zur Digitalisierung des Messsignals jeweils alle mit dem aktuellen Messwert abgeglichen werden. Dieser umfassende Abgleich ist relativ zeitintensiv und ermöglicht lediglich eine begrenzte Auflösung der Relativposition. Die Referenzwerte sind dabei an diejenige Komponente des Messsignals angepasst, welche zur Digitalisierung herangezogen werden soll. Soll beispielsweise der Spannungswert des Messsignals zur Digitalisierung herangezogen werden, handelt es sich bei den Referenzwerten um Spannungswerte. Soll hingegen der Stromwert des Messsignals zur Digitalisierung herangezogen werden, handelt es sich bei den Referenzwerten um Stromwerte.

Vor diesem Hintergrund ist es eine Aufgabe der vorliegenden Erfindung, Vorrichtungen und Verfahren zu präsentieren, welche weniger zeitintensiv sind und/oder eine höhere Auflösung der Relativposition ermöglichen.

Diese Aufgabe wird durch Vorrichtungen gemäß Anspruch 1 gelöst. Weiterbildungen dieser sowie ein entsprechendes Verfahren sind den weiteren Ansprüchen zu entnehmen.

Die erfindungsgemäße Vorrichtung zeichnet sich dadurch aus, dass wenigstens eine Spezifizierungseinheit vorgesehen und dazu ausgebildet ist, anhand eines zuvor gemessenen Ausgangswerts des zu digitalisierenden Messsignals ein Spezifizierungssignal, welches einen Bereich mit einem unteren und einem oberen Grenzwert für zur nachfolgenden Digitalisierung des Messsignals zu verwendende Referenzwerte anzeigt, zu erzeugen und an den Analog-Digital-Umsetzer auszugeben. Der Analog-Digital-Umsetzer ist dazu ausgebildet, die nachfolgende Digitalisierung des wenigstens einen Messsignals, zumindest in einem ersten Schritt, insbesondere vollumfänglich (d.h. nicht nur in dem ersten Schritt, sondern ohne weitere Schritte), lediglich anhand von Referenzwerten vorzunehmen, welche zwischen einem unteren Grenzwert und einem oberen Grenzwert des Bereichs für zur nachfolgenden Digitalisierung des Messsignals zu verwendenden Referenzwerten liegen.

Mit anderen Worten, die Digitalisierung erfolgt nicht anhand der Gesamtheit der Referenzwerte (d.h. im maximalen Arbeitsbereich des Analog-Digital-Umsetzers), welche zur umfassenden Digitalisierung des Messsignals über dessen gesamte Amplitude hinweg notwendig ist, sondern lediglich anhand von Referenzwerten aus einem Teilbereich dieser Gesamtheit der Referenzwerte. Ein geeigneter Teilbereich wird durch eine Spezifizierungseinheit anhand eines vorangegangenen Messwerts des Messsignals definiert.

Insbesondere identifiziert die Spezifizierungseinheit anhand des Werts des Messsignals zu einem ersten Zeitpunkt einen Bereich von Messwerten, in welchem der Messwert zu einem nachfolgenden zweiten Zeitpunkt liegen muss. Die Digitalisierung des nachfolgenden Messwerts bzw. Messsignals erfolgt schließlich lediglich anhand von Referenzwerten aus diesem Bereich, und nicht anhand der Gesamtheit der Referenzwerte.

Dies ermöglicht eine zielgerichtete Abtastung des Messsignals und ist damit besonders effizient. Dabei versteht es sich natürlich, dass der erste Zeitpunkt und der zweite Zeitpunkt im Vergleich zur Geschwindigkeit der Relativbewegung nahe beieinander liegen müssen, um auch eine tatsächliche Einschränkung des Bereichs zu erhalten, aus welchem die Referenzwerte stammen. Insbesondere beträgt ein Zeitraum zwischen dem ersten Zeitpunkt und dem zweiten Zeitpunkt höchstens 50%, bevorzugt höchstens 30%, der Zeit, welche das Messsignal mindestens benötigt, um seine gesamte mögliche Amplitude zu durchlaufen. Je näher die beiden Zeitpunkte beieinander liegen, also je höher die Abtastfrequenz des Messsignals ist, desto größer ist die Wirkung der Einschränkung des Bereichs für die Referenzwerte zur Digitalisierung.

Die erfindungsgemäße Beschränkung der Referenzwerte zur Digitalisierung ermöglicht eine besonders effiziente Digitalisierung des Messsignals. Dies kann beispielsweise bei gleichbleibender zeitlicher und räumlicher Auflösung dazu genutzt werden, die zur Digitalisierung benötigte Zeit zu reduzieren. Als räumliche Auflösung in Bezug auf die Digitalisierung des Messsignals wird vorliegend die Auflösung der jeweiligen Signalamplitude, mit welcher die Amplitude des Messsignals durch den digitalisierten Messwert abgebildet wird, verstanden. Alternativ (oder ergänzend) dazu ist es auch möglich, die Auflösung der Relativposition, sowohl räumlich als auch zeitlich zu erhöhen. Konkret kann die Reduktion der benötigten Zeit pro digitalisierten Messwert dazu verwendet werden, mehr Messwerte (also mit einer höheren Abtastfrequenz) zu digitalisieren und auszuwerten, um die zeitliche Auflösung der Relativposition zu verbessern. Die räumliche Auflösung kann beispielsweise dadurch erhöht werden, dass bei gleichbleibender Abtastfrequenz die eingesparte Zeit dazu verwendet wird, neue ursprünglich nicht vorgesehene Referenzwerte zur Digitalisierung in dem identifizierten Bereich auszuwählen und zur Digitalisierung zu verwenden. Beispielsweise umfasst die Auswahl von zur Digitalisierung vorgesehenen Referenzwerte dann eine erste Gruppe von Referenzwerten aus der Gesamtheit der herkömmlich verwendeten Referenzwerte in einem entsprechenden Bereich und Referenzwerte, welche jeweils zwischen den herkömmlich verwendeten Referenzwerten dieses Bereichs liegen.

Je nach konkreter Ausgestaltung und Zielsetzung können dabei die oben beschriebenen Weiterbildungsmöglichkeiten miteinander kombiniert werden. Angenommen die vorgenommene Einschränkung der Referenzwerte resultiert darin, dass nur noch etwa 40% der herkömmlich notwendigen Abgleiche pro Messwert vorzunehmen sind. Wird dann die Abtastfrequenz verdoppelt, um die zeitliche Auflösung der Relativposition zu verdoppelt, bleibt immer noch eine Gesamtersparnis der notwendigen Zeit von 20%. Mit anderen Worten, eine 60%-tige Reduktion der Zahl von zur Digitalisierung eines Messwerts zu berücksichtigen Referenzwerte ermöglicht eine 100%-tige Steigerung der zeitlichen Auflösung bei einer 20%-tigen Reduktion der notwendigen Zeit bei gleichbleibender räumlicher Auflösung. Selbiges ist auch auf die räumliche Auflösung übertragbar, wobei hier dann der durchschnittliche Abstand der zur Digitalisierung verwendeten Referenzwerte zu reduzieren ist (d.h. die Dichte der Referenzwerte wird erhöht).

Diese spezifische Art der Digitalisierung erfolgt bei einer Mehrzahl von zu digitalisierenden Messsignalen bevorzugt für jedes Messsignal separat, aber bevorzugt synchron für die Gesamtheit der zu digitalisierenden Messsignale.

Bevorzugt ist die Spezifizierungseinheit dazu ausgebildet, anhand des Ausgangswerts eine Auswahl von Referenzwerten für die Digitalisierung zu identifizieren und in Gestalt des Spezifizierungssignals auszugeben, während der Analog-Digital-Umsetzer dazu ausgebildet ist, das erhaltene Spezifizierungssignal direkt mit dem wenigstens einen Messsignal abzugleichen.

Der Abgleich des Spezifizierungssignals mit dem Messsignal erfolgt insbesondere dergestalt, dass effektiv jeder einzelne Messwert mit einer Mehrzahl von Referenzwerten abgeglichen wird, um den einzelnen Messwert möglichst genau aufzulösen. Dies ist beispielsweise über eine "Sample-and-Hold"-Einheit möglich. Auch kann das Spezifizierungssignal im Vergleich zum Messsignal mit einer deutlich höheren Geschwindigkeit bzw. Frequenz variieren.

Alternativ dazu ist die Spezifizierungseinheit dazu ausgebildet, das Spezifizierungssignal derart zu erzeugen, dass dieses lediglich mittelbar den Bereich von Referenzwerten für die Digitalisierung des wenigstens einen Messsignals anzeigt, während der Analog-Digital-Umsetzer dazu ausgebildet ist, aus dem erhaltenen Spezifizierungssignal auf den hierdurch angezeigten Bereich für zur nachfolgenden Digitalisierung des Messsignals zu verwendenden Referenzwerten zu schließen und die Digitalisierung des wenigstens einen Messsignals zunächst lediglich anhand von Referenzwerten aus diesem Bereich vorzunehmen.

Diese Variante ist wohl etwas komplexer, ermöglicht aber eine freiere Umsetzung der Vorrichtung und Anpassung des finalen Digitalisierungsprozesses innerhalb des Analog-Digital-Umsetzers. Beispielsweise könnte das Spezifizierungssignal den oberen Grenzwert und den unteren Grenzwert für zur Digitalisierung zu verwendende Referenzwerten anzeigen, während die Endauswahl der konkret verwendeten Referenzwerte durch den Analog-Digital-Umsetzer erfolgt. Die räumliche Auflösung (also die Zahl der zur Digitalisierung berücksichtigten Referenzwerte) der Vorrichtung könnte dann direkt am Analog-Digital-Umsetzer (bzw. durch diesen) eingestellt werden. Auch hier ergibt für den Abgleich der Einsatz einer "Sample-and-Hold"-Einheit Sinn.

Erfindungsgemäß ist die Spezifizierungseinheit dazu ausgebildet, den oberen Grenzwert des Bereichs von Referenzwerten für die Digitalisierung zu identifizieren, indem sie einen Wert der maximal zulässigen Änderung des jeweiligen Messwerts innerhalb der seit dem Zeitpunkt der Ermittlung des Ausgangswerts verstrichenen Zeit zu dem gemessenen Ausgangswert addiert. Alternativ oder ergänzend dazu ist die Spezifizierungseinheit erfindungsgemäß dazu ausgebildet, den unteren Grenzwert zu identifizieren, indem sie einen Wert der maximal zulässigen Änderung des jeweiligen Messwerts innerhalb der seit dem Zeitpunkt der Ermittlung des Ausgangswerts verstrichenen Zeit von dem gemessenen Ausgangswert subtrahiert. In beiden Fällen ist die Spezifizierungseinheit dazu ausgebildet, den Wert der maximal zulässigen Änderung des jeweiligen Messwerts aus spezifischen Eigenschaften, wie einer maximalen Bewegungsgeschwindigkeit und/oder einer maximalen Beschleunigung der beiden Teile relativ zu einander, zu ermitteln.

Eine derartige Ermittlung des Bereichs von Referenzwerten für die Digitalisierung ist vergleichsweise einfach und damit wenig fehleranfällig und benötigt vergleichsweise wenig Zeit.

Bevorzugt dient als Ausgangswert immer der zuletzt gemessene Wert des Messsignals.

Mit anderen Worten, es erfolgt eine kontinuierliche Anpassung bzw. Aktualisierung des Ausgangswerts, was es ermöglicht, die verstrichene Zeit zwischen der Ermittlung des Ausgangswerts und dem Zeitpunkt des nachfolgend zu digitalisierenden Messwerts zu minimieren. Dies wiederum ermöglicht die maximale Reduktion des Bereichs für zur effizienten Digitalisierung abzugleichenden Referenzwerten.

Bevorzugt ist in der Spezifizierungseinheit ein Maximalwert und/oder ein Minimalwert abgelegt, oder kann die Spezifizierungseinheit einen Maximalwert und/oder einen Minimalwert von einer anderen Einheit abrufen, wobei der Maximalwert und/oder der Minimalwert eine absolute Obergrenze bzw. eine absolute Untergrenze für zulässige Referenzwerte definiert. Die Spezifizierungseinheit ist dabei dazu ausgebildet, den besagten Maximalwert und/oder den besagten Minimalwert bei der Ermittlung des oberen Grenzwerts und/oder des unteren Grenzwerts für den Bereich der Referenzwerte für die Digitalisierung zu berücksichtigen.

Konkret kann die Spezifizierungseinheit dazu ausgebildet sein, den oberen Grenzwert auf den Maximalwert zu reduzieren, falls sich in einem vorangehenden Schritt rechnerisch ein oberer Grenzwert ergibt, welcher über dem Maximalwert liegt. In analoger Weise kann die Spezifizierungseinheit dazu ausgebildet sein, den unteren Grenzwert auf den Minimalwert zu erhöhen, falls sich in einem vorangehenden Schritt rechnerisch ein unterer Grenzwert ergibt, welcher unter dem Minimalwert liegt. Dies ermöglicht eine weitere Spezifizierung und Einschränkung des Bereichs für zur Digitalisierung eines Messwerts zu berücksichtigenden Referenzwerten.

Bevorzugt ist die Spezifizierungseinheit dazu ausgebildet, in einem vorgegebenen Rhythmus den oberen Grenzwert und den unteren Grenzwert für den Bereich der Referenzwerte für die Digitalisierung vorübergehend auf den Maximalwert und den Minimalwert zusetzen, um ein Driften in den Werten des Messsignals identifizieren und nachfolgend korrigieren zu können.

Konkret kann anhand eines regelmäßigen Abgleichs der Messwerte mit dem Minimalwert und/oder dem Maximalwert ermittelt werden, ob die Messwerte über den gesamten zulässigen Bereich von Messwerten verteilt sind, oder einem unerwünschten Driften unterliegen. Ein solches Driften kann zur Korrektur der Ermittlung der Relativposition rechnerisch ausgeglichen werden.

Bevorzugt liegt der Maximalwert oberhalb des größten zu erwartenden Werts des zu digitalisierenden Messsignals, und/oder der Minimalwert unterhalb des kleinsten zu erwartenden Werts des zu digitalisierenden Messsignals.

Dies ermöglicht es Ausreißer und/oder ein Driften in den Messwerten zu identifizieren und zu korrigieren.

Bevorzugt ist der Analog-Digital-Umsetzer dazu ausgebildet, die Digitalisierung des Messsignals anhand von Referenzwerten aus dem identifizierten Bereich vorzunehmen, welche jeweils den selben Abstand voneinander aufweisen, wie Referenzwerte bei einer entsprechenden Digitalisierung ohne Beschränkung der Referenzwerte.

Mit anderen Worten, die Digitalisierung des Messsignals erfolgt bei unveränderter räumlicher Auflösung, was Zeit einspart.

Alternativ dazu kann der Analog-Digital-Umsetzer dazu ausgebildet sein, die Digitalisierung anhand von Referenzwerten aus dem identifizierten Bereich vorzunehmen, welche einen kleineren Abstand voneinander aufweisen, als Referenzwerte bei einer entsprechenden Digitalisierung ohne Beschränkung der Referenzwerte.

Diese relative Erhöhung der Abtastdichte resultiert in einer Erhöhung der räumlichen Auflösung.

Insbesondere ist dabei der Abstand zwischen entsprechenden Referenzwerten derart verringert ist, dass die Zahl der zur Digitalisierung verwendeten Referenzwerte aus dem beschränkten Bereich der Zahl von zur Digitalisierung verwendeten Referenzwerten bei der herkömmlichen Digitalisierung entspricht.

Das heißt, dass die Zahl an Abgleichen eines einzelnen Messwerts mit Referenzwerten zur Digitalisierung beibehalten wird (also keine Zeit eingespart wird), jedoch die Abtastdichte und damit die räumliche Auflösung erhöht wird.

Bevorzugt ist eine Überwachungseinheit vorgesehen, welche das digitalisierte Signal auf ein Driften hin überwacht und bei Erkennung eines solchen ein Warnsignal ausgibt und/oder die Spezifizierungseinheit mit einem Signal zur Korrektur dieses Driftens versorgt.

Dies erlaubt es systematische Fehler zu erkennen und im Bestfall weitestgehend auszugleichen. Ein Ausgleich des Driftens kann beispielsweise eine Verschiebung des oberen Grenzwerts (ggf. zusammen mit dem Maximalwert) und des unteren Grenzwerts (ggf. zusammen mit dem Minimalwert) erfordern.

Bevorzugt ist die Spezifizierungseinheit dazu ausgebildet, den unteren Grenzwert und/oder den oberen Grenzwert für den Bereich der Referenzwerte für die Digitalisierung mittels einer Mehrzahl von Zwischenschritten zu ermitteln.

Mit anderen Worten, die Identifizierung des Bereichs für Referenzwerte zur effizienten Digitalisierung basiert auf einem komplexen mehrschrittigen Verfahren, in welchem unterschiedliche Aspekte berücksichtigt und schrittweise verrechnet werden. Das einfachste Beispiel eines solchen mehrschrittigen Verfahrens ist eines, in welchem in einem ersten Schritt lediglich anhand des vorhergehenden Messwerts der obere und der untere Grenzwert ermittelt werden, während in einem zweiten Schritt ein Abgleich dieser Werte mit einem Maximalwert und einem Minimalwert erfolgt. In einem dritten Schritt erfolgt dann anhand des Ergebnisses des zweiten Schritts eine Anpassung des oberen und/oder des unteren Grenzwerts, indem im Bedarfsfall wenigstens einer von diesen beiden Grenzwerten auf den Maximalwert bzw. den Minimalwert gesetzt wird.

Bevorzugt ist die Spezifizierungseinheit dazu ausgebildet, den Bereich der für die Digitalisierung zu verwendenden Referenzwerte dynamisch anzupassen bzw. zu aktualisieren.

Bevorzugt ist die Spezifizierungseinheit dazu ausgebildet, den Bereich der für die Digitalisierung zu verwendenden Referenzwerte unter Berücksichtigung von ermittelten Positions-, Richtungs-, Geschwindigkeits- und/oder Beschleunigungswerten zur Relativbewegung zwischen dem ersten und dem zweiten Teil zu bestimmen.

Positions-, Geschwindigkeits- und Beschleunigungsdaten sind relativ einfach aus den Informationen zur Relativposition zu ermitteln und eignen sich besonders gut zur Vorhersage der nachfolgenden Relativpositionen und entsprechender Messwerte. Sie erlauben dementsprechend eine einfache und zuverlässige Einschränkung der Auswahl der zur effizienten Digitalisierung zu verwendenden Referenzwerte.

Bevorzugt umfasst die Vorrichtung auch wenigstens eine "Sample-and-Hold"-Einheit, insbesondere in einem oder mehreren der Analog-Digital-Umsetzer.

Eine "Sample-and-Hold"-Einheit oder -Stufe wird genutzt, um den aktuell vorliegenden Messwert (beispielsweise eine Spannung) kurzzeitig zu "speichern". Das heißt, dass auch wenn sich der eigentliche Messwert während des Digitalisierungsprozesses verändert, der am Analog-Digital-Umsetzer anliegende Wert konstant bleibt. "Sample-and-Hold"-Einheiten oder -Stufen können sowohl bei Verwendung von SAR- als auch Sigmal-Delta-Analog-Digital-Umsetzern eingesetzt werden.

Erfindungsgemäß umfasst ein Verfahren zur Positions-, Längen-, oder Winkelbestimmung, insbesondere mittels einer zuvor beschriebenen Vorrichtung, folgende Schritte: Bewegung eines ersten Teils und eines zweiten Teils relativ zueinander; Erfassung zumindest eines Teils einer an dem ersten Teil angebrachten Codierung mittels mehrerer Sensoren einer an dem zweiten Teil angebrachten Auslesevorrichtung, und Ausgabe entsprechender analoger Messsignale; Digitalisierung des Messsignals mindestens eines der Sensoren anhand eines Abgleichs einzelner Messwerte des Messsignals mit einer Mehrzahl von unterschiedlichen Referenzwerten, insbesondere einer einzelnen Art; und Ermittlung einer Relativposition zwischen dem ersten und dem zweiten Teil aus den digitalisierten Messsignalen; sowie die Erzeugung eines Spezifizierungssignals, welches einen Bereich für zur nachfolgenden Digitalisierung des Messsignals zu verwendenden Referenzwerten anzeigt, anhand eines zuvor gemessenen Ausgangswerts des zu digitalisierenden Messsignals. Die nachfolgende Digitalisierung des wenigstens einen Messsignals wird, zumindest in einem ersten Schritt, insbesondere vollumfänglich, lediglich anhand von Referenzwerten vorgenommen, welche zwischen einem unteren Grenzwert und einem oberen Grenzwert des identifizierten Bereichs für zur nachfolgenden Digitalisierung des Messsignals zu verwendenden Referenzwerten liegen.

Mit anderen Worten, es erfolgt die herkömmliche Digitalisierung wenigstens eines Messwerts eines Messsignals anhand einer umfassenden Auswahl von Referenzwerten, welche die gesamte zulässige Amplitude des Messsignals abdeckt, während in nachfolgenden Digitalisierungsschritten jeweils lediglich Referenzwerte aus einem eingeschränkten Bereich von Referenzwerten zur Digitalisierung verwendet werden. Dies ermöglicht eine effizientere Digitalisierung bei gleichbleibender Auflösung.

Erfindungsgemäß wird der obere Grenzwert des Bereichs von Referenzwerten für die Digitalisierung identifiziert, indem ein Wert der maximal zulässigen Änderung des jeweiligen Messwerts innerhalb der seit dem Zeitpunkt der Ermittlung des Ausgangswerts verstrichenen Zeit zu dem gemessenen Ausgangswert addiert wird. Alternativ oder ergänzend dazu wird der untere Grenzwert des Bereichs von Referenzwerten für die Digitalisierung identifiziert, indem ein Wert der maximal zulässigen Änderung des jeweiligen Messwerts innerhalb der seit dem Zeitpunkt der Ermittlung des Ausgangswerts verstrichenen Zeit von dem gemessenen Ausgangswert subtrahiert wird. In beiden Fällen wird der Wert der maximal zulässigen Änderung des jeweiligen Messwerts aus spezifischen Eigenschaften, wie einer maximalen Bewegungsgeschwindigkeit und/oder einer maximalen Beschleunigung der beiden Teile relativ zu einander, ermittelt.

Eine derartige Ermittlung des Bereichs von Referenzwerten für die Digitalisierung ist vergleichsweise einfach und damit wenig fehleranfällig und benötigt vergleichsweise wenig Zeit.

Das erfindungsgemäße Verfahren kann natürlich beliebig mit Verfahrensschritten, welche den oben hinsichtlich der Vorrichtung beschriebenen strukturellen und/oder funktionellen Merkmalen entsprechen, ergänzt und/oder spezifiziert werden.

Nachfolgend wird die Erfindung rein beispielhaft unter Bezugnahme auf die Zeichnungen beschrieben. Es zeigt:
- Fig. 1: eine schematische Ansicht des Aufbaus einer beispielhaften Vorrichtung zur Positions- oder Längenbestimmung; und
- Fig. 2: eine schematische Ansicht einer erfindungsgemäßen Ausgestaltung.

In den Figuren bezeichnen gleiche Bezugszeichen gleiche oder ähnliche Merkmale.

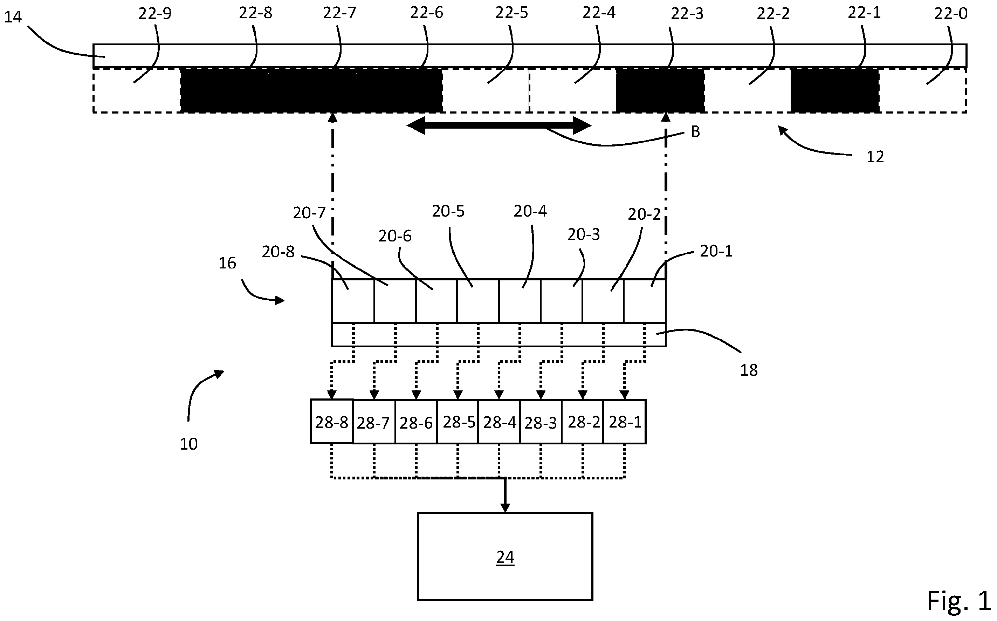

Fig. 1 zeigt schematisch den Grundaufbau einer Vorrichtung 10 zur Positions- oder Längenbestimmung. Die gezeigte Vorrichtung 10 dient als Encoder, beispielsweise in einem Motor-Feedback-System (nicht gezeigt).

Die Vorrichtung 10 umfasst einen ersten Teil 14, an welchem vorliegend eine absolute Codierung 12 angebracht ist. Die Codierung 12 kann je nach Anwendung aber auch in Gestalt einer Inkrementalcodierung vorliegen. Die Vorrichtung 10 umfasst ferner einen zweiten Teil 18, an welchem eine Auslesevorrichtung 16 angebracht ist. Die Codierung 12 und die Auslesevorrichtung 16 sind an dem ersten Teil 14 und an dem zweiten Teil 18 derart befestigt, dass sie sich gemeinsam mit den beiden Teilen 14 und 18 relativ zueinander bewegen. Der erste Teil 14 und der zweite Teil 18 - und damit die Codierung 12 sowie die Auslesevorrichtung 16 - sind im vorliegenden Beispiel rein translatorisch relativ zueinander bewegbar (siehe den Doppelpfeil B). Rein rotatorische Relativbewegungen sind für einen Fachmann auch ohne weiteres umzusetzen.

Die Codierung 12 ist durch eine Vielzahl aufeinander folgender Codeabschnitte 22-0 bis 22-9 erster Art (weiß dargestellt) und zweiter Art (schwarz dargestellt) gebildet. In Fig. 1 sind lediglich zehn solcher Codeabschnitte 22-0 bis 22-9 abgebildet. Die Codierung 12 kann zu den abgebildeten Codeabschnitten 22-0 bis 22-9 links und/oder rechts noch weitere Codeabschnitte umfassen. Dies würde eine Bestimmung der Relativposition zwischen den beiden Teilen 14 und 18 über einen größeren Bereich hinweg ermöglichen, als dies mit den abgebildeten zehn Codeabschnitten 22-0 bis 22-9 möglich ist.

Die Auslesevorrichtung 16 umfasst vorliegend acht Sensoren 20-1 bis 20-8, beispielsweise in Gestalt von Photodioden, wobei die Sensoren 20-1 bis 20-8 parallel zur Codierung 12 nebeneinander angeordnet sind. Die Sensoren 20-1 bis 20-8 sind auf die Codierung 12 ausgerichtet und zur Erfassung der unterschiedlichen Codeabschnitte 22-0 bis 22-9 der Codierung 12 ausgebildet.

Für eine gleichmäßige Beleuchtung der Codeabschnitte 22-0 bis 22-9 kann eine Lichtquelle (nicht gezeigt) vorgesehen sein, welche zumindest diejenigen Codeabschnitte 22-0 bis 22-9 beleuchtet, welche im Erfassungsbereich der Sensoren 20-1 bis 20-8 (der Bereich zwischen den beiden gestrichelt-doppelgepunkteten Pfeilen) liegen. Jeder der Sensoren 20-1 bis 20-8 empfängt - je nach Art der Codeabschnitte 22-0 bis 22-9 in dessen Erfassungsbereich - eine bestimmte Menge von durch die jeweiligen Codeabschnitte 22-0 bis 22-9 reflektierten oder transmittierten Lichts. Die Sensoren 20-1 bis 20-8 geben daraufhin einen entsprechenden Messwert aus, beispielsweise in Gestalt eines Spannungs- oder Stromwerts.

Zur erleichterten Auswertung der Messwerte der Sensoren 20-1 bis 20-8 sind die Codeabschnitte 22-0 bis 22-9 jeweils räumlich identisch zueinander ausgebildet. Vorliegend wird angenommen, dass der Erfassungsbereich jedes Sensors 20-1 bis 20-8 halb so breit ist, wie die einzelnen Codeabschnitte 22-0 bis 22-9 lang sind. Die Sensoren 20-1 bis 20-8 sind derart auf die Codierung 12 ausgerichtet, dass sie einen zusammenhängenden Erfassungsbereich (siehe den Bereich zwischen den gestrichelt-doppelgepunktet Pfeilen in Fig. 1) auf der Codierung 12 abbilden, welcher in seiner Länge gerade der Länge eines Codeworts der Codierung 12 entspricht. Mit anderen Worten, jeder Codeabschnitt 22-4 bis 22-6, welcher vollkommen im Erfassungsbereich der Sensoren 20-1 bis 20-8 liegt, befindet sich im Erfassungsbereich von zumindest zwei, insbesondere drei, benachbarten Sensoren 20-1 bis 20-8. Dies ermöglicht eine besonders feine Abtastung der Codierung 12 und damit eine besonders genaue Auflösung der Relativposition zwischen dem ersten Teil 14 und dem zweiten Teil 18.

Jedem der Sensoren 20-1 bis 20-8 ist ein separater Analog-Digital-Umsetzer 28-1 bis 28-8 nachgeschaltet. Auch ist es denkbar kombinierte Messsignale mehrerer unterschiedlicher der Sensoren 20-1 bis 20-8, insbesondere mit gleicher Phase, einzelnen gemeinsamen Analog-Digital-Umsetzern zu übermitteln. Die Analog-Digital-Umsetzer 28-1 bis 28-8 sind mit einer Auswerteinheit 24 gekoppelt.

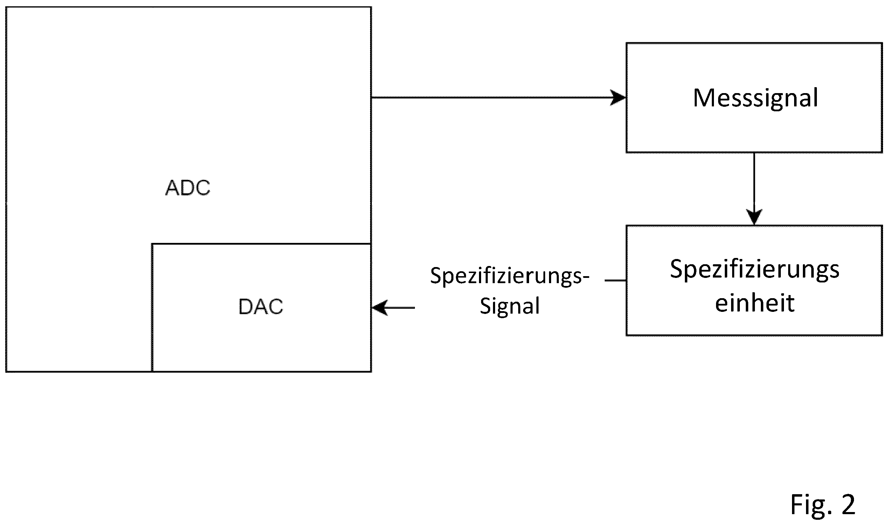

Es kann eine (in Fig. 1 nicht explizit dargestellte) Spezifizierungseinheit vorgesehen sein, die z.B. in der Auswerteinheit 24 angeordnet ist. Wie in Fig. 2 angedeutet ist, erzeugt die Spezifizierungseinheit unmittelbar aus den digitalisierten Messsignalen ein Spezifizierungssignal, welches, vorliegend über einen Digital-Analog-Umsetzer DAC, dem Analog-Digital-Umsetzer ADC zur Digitalisierung nachfolgender Messsignale übermittelt wird.

Die Digitalisierung in den Analog-Digital-Umsetzern 28-1 bis 28-8 erfolgt dabei über einen Abgleich eines nachfolgend erhaltenen Messsignals von den Sensoren 20-1 bis 20-8 mit dem von der Spezifizierungseinheit erhaltenen Spezifizierungssignal bzw. mit durch dieses Spezifizierungssignal angezeigten Referenzwerten. Ein hieraus generiertes digitales Vergleichssignal wird dann wiederum zur Analyse der relativen Position, Bewegungsgeschwindigkeit und/oder Beschleunigung an eine Auswerteinheit 24 ausgegeben.

Zur Digitalisierung wird dabei effektiv jeder Messwert anhand einer Mehrzahl von unterschiedlichen Referenzwerten binarisiert. Die Auswerteinheit 24 kann dann anhand des entsprechenden Vergleichssignals genauer die konkrete Form des Messsignals rekonstruieren und damit die Positionen der Übergänge im Erfassungsbereich der Sensoren 20-1 bis 20-8 sowie die entsprechende Relativposition zwischen dem ersten Teil 14 und dem zweiten Teil 18 genauer bestimmen.

Anschaulich gesprochen kann im ersten Analog-Digital-Umsetzer 28-1 ein analoger Messwert von dem ersten Sensor 20-1 mit beispielsweise drei unterschiedlichen Referenzwerten verglichen werden, welche durch das Spezifizierungssignal vorgegeben werden. Es sei beispielsweise angenommen, dass ein erster Messwert bei 80% des zulässigen Maximalwerts liegt und die drei durch das Spezifizierungssignal definierten Referenzwerte bei 25%, 50% und 75% liegen. Dann gibt der Analog-Digital-Umsetzer 28-1 als binarisiertes Vergleichssignal für den ersten Messwert ein "111" an die Auswerteinheit 24 aus, da der erste Messwert größer als alle drei Referenzwerte ist. Hieraus kann die Auswerteinheit 24 darauf schließen, dass der Messwert (und damit die zugehörige Überdeckung) bei mindestens 75% liegt. Im Falle eines zweiten nachfolgenden Messwerts von beispielsweise 60% würde das binarisierte Vergleichssignal einer "110" entsprechen. Hieraus kann die Auswerteinheit 24 darauf schließen, dass der zweite Messwert (und damit die zugehörige Überdeckung) zwischen 50% und 75% liegt. Dies erlaubt es der Auswerteinheit 24 eine Unterscheidung zwischen den Situationen der beiden beispielhaften Messwerte von 80% und 60% vorzunehmen. Basierend darauf kann die Auswerteinheit die Relativposition zwischen dem ersten und dem zweiten Teil 14 und 18 genauer bestimmen. Bei einer herkömmlichen Ausgestaltung mit einem festen Vergleichswert von beispielsweise 50% wäre diese Unterscheidung nicht möglich, da die Auswerteinheit 24 im binarisierten Signal keinen Unterschied auflösen kann. Das binarisierte Signal würde nämlich für beide Messwerte lediglich eine "1" anzeigen.

Zu dem obigen Beispiel sei klargestellt, dass in der Praxis die Anzahl der zur Digitalisierung verwendeten Referenzwerte viel höher als drei ist (z.B. bei 10-Bit Analog-Digital-Umsetzer hätte man 2 hoch 10, also 1024 Referenzwerte).

Konkret geht es hierbei um die Unterscheidung von nahe beieinander liegenden Relativpositionen bzw. der Feinbestimmung der Relativposition (also solange sich derselbe Codeabschnitt 22-0 bis 22-9 vor demselben Sensor 20-1 bis 20-8 befindet). Eine Grobbestimmung der Relativposition erfolgt noch immer über einen Abgleich der Gesamtheit der Messwerte aller Sensoren 20-1 bis 20-8 mit dem Gesamtaufbau der Codierung 12.

Herkömmlich wird jeder einzelne Messwert mit der Gesamtheit von zur umfassenden Digitalisierung notwendigen Referenzwerten abgeglichen. Die Gesamtheit dieser Referenzwerte deckt dabei den gesamten Bereich der zulässigen Amplitude des Messsignals ab. Je mehr Referenzwerte über diese Amplitude verteilt sind, desto genauer ist die räumliche Feinauflösung der Relativposition möglich.

Die vorliegende Erfindung basiert auf der Feststellung, dass bei einer ausreichend hohen Abtastfrequenz, also bei lediglich geringfügigen Verschiebungen zwischen zwei aufeinander folgenden Relativpositionen, auch lediglich begrenzte Variationen in den zugehörigen Messwerten bzw. Messsignalen zu erwarten sind. Folglich ist es zur Digitalisierung eines auf einen ersten Messwert folgenden zweiten Messwerts nicht notwendig, die Gesamtheit der zur umfassenden Abtastung des Messsignals notwendigen Referenzwerte mit dem nachfolgenden Messwert abzugleichen. Vielmehr reicht es aus, lediglich eine Auswahl der Referenzwerte zur Digitalisierung zu verwenden.

Zurückkommend auf das obige Beispiel ist beispielsweise zu dem ersten Messwert erkannt worden, dass dieser oberhalb von 75% des Maximalamplitude liegt und damit die beiden Teile 14 und 18 in einer entsprechenden ersten Relativposition zueinander liegen. Bei einer ausreichend hohen Abtastfrequenz ist zu erwarten, dass der nachfolgende Messwert weiterhin in dem Bereich zwischen 75% und 100% liegt oder allerhöchstens in den hieran angrenzenden Bereich von 50% bis 75% "abrutscht". Sofern ein Messwert von unter 50% ausgeschlossen werden kann, reicht es aus, den nachfolgenden Messwert mit den beiden Referenzwerten 50% und 75% abzugleichen, während auf einen Abgleich mit dem Referenzwert von 25% verzichtet wird. Dies ermöglicht eine effizientere Digitalisierung der Messwerte. Je mehr Referenzwerte zur umfassenden Digitalisierung der Messsignale vorgesehen werden, also je genauer die räumliche Auflösung der Relativposition zwischen den beiden Teilen 14 und 18 erfolgt, desto größer fällt der Effizienzgewinn aus. Bei angenommenen zehn Referenzwerten zur Abdeckung der gesamten Amplitude des Messsignals und einer derart hohen Abtastfrequenz, dass höchstens mit einem Wechsel zwischen den durch die Referenzwerte getrennten Bereichen zu rechnen ist, reichen pro Messwert bereits Abgleiche mit zwei bis drei der zehn Referenzwerte, um jeden der Messwerte mit derselben räumlichen Auflösung zu digitalisieren, wie mit einem Abgleich mit allen zehn Referenzwerten.

Entsprechend der vorliegenden Erfindung ist zur Umsetzung dieses Grundgedankens die Spezifizierungseinheit dazu ausgebildet, anhand eines Ausgangswerts des zu digitalisierenden Messsignals einen Bereich von Referenzwerten aus der Gesamtheit von zur umfassenden Digitalisierung der Messwerte notwendigen Referenzwerte zur effizienten Digitalisierung zu identifizieren und ein entsprechendes Spezifizierungssignal an den Analog-Digital-Umsetzer 28-1 bis 28-8 auszugeben. Im Analog-Digital-Umsetzer 28-1 bis 28-8 erfolgt dann die Digitalisierung nachfolgender Messwerte, insbesondere lediglich, anhand von Referenzwerten aus diesem Bereich von Referenzwerten zur effizienten Digitalisierung.

Erfindungsgemäß erfolgt also keine Digitalisierung der Messwerte anhand eines einzelnen vordefinierten umfassenden Satzes von Referenzwerten, sondern anhand einer für jeden einzelnen Messwert spezifischen Auswahl von Referenzwerten. Die jeweilige Auswahl wird durch die Spezifizierungseinheit anhand eines vorangegangenen Messwerts eingeschränkt. Je höher die Abtastfrequenz des Anlog-Digital-Umsetzers 28-1 bis 28-8 ist, desto größer ist hierbei die mögliche Einsparung von Zeit. Die eingesparte Zeit kann dann zur Erhöhung der Auflösung der Relativposition (räumlich und/oder zeitlich) verwendet werden.

Es ist dabei möglich, dass die Spezifizierungseinheit das Spezifizierungssignal derart erzeugt, dass dieses durch die vorgesehenen Analog-Digital-Umsetzer 28-1 bis 28-8 direkt mit dem Messsignal bzw. Differenzsignal abgeglichen werden kann, um dieses zu Digitalisieren. Hierfür umfasst die Spezifizierungseinheit bevorzugter Weise auch einen Digital-Analog-Umsetzer (siehe Fig. 2). Auch kann eine "Sample-and-Hold"-Einheit zur Möglichkeit des umfassenden Abgleichs eines einzelnen festen Messwerts mit der Gesamtheit der Referenzwerte aus dem identifizierten Bereich vorgesehen werden.

Alternativ dazu kann die Spezifizierungseinheit auch ein Spezifizierungssignal erzeugen, welches eine Verarbeitung durch den Anlog-Digital-Umsetzer 28-1 bis 28-8 zur Identifizierung der Auswahl von Referenzwerten zur Digitalisierung verlangt. Hierbei kann das erzeugte Spezifizierungssignal lediglich den oberen Grenzwert und den unteren Grenzwert des Bereichs angeben, aus welchem die zur Digitalisierung zu verwendenden Referenzwerte zu nehmen sind, während der Analog-Digital-Umsetzer 28-1 bis 28-8 dazu ausgebildet ist, selbständig aus diesem Bereich konkrete Referenzwerte auszuwählen und zur Digitalisierung zu verwenden.

Die Spezifizierungseinheit kann die Auswahl von Referenzwerten zur Digitalisierung beispielsweise derart treffen, dass sie anhand spezifischer Eigenschaften der Vorrichtung, wie beispielsweise einer maximalen Bewegungsgeschwindigkeit und/oder einer maximalen Beschleunigung der beiden Teile 14 und 18 relativ zueinander, eine maximal zulässige Änderung des Messwerts ermittelt. Den oberen Grenzwert des Bereichs von Referenzwerten zur effizienten Digitalisierung kann die Spezifizierungseinheit dann durch einfache Addition der maximal zulässigen Änderung zu dem Ausgangswert erhalten. Den unteren Grenzwert des Bereichs von Referenzwerten zur effizienten Digitalisierung kann die Spezifizierungseinheit durch einfache Subtraktion der maximal zulässigen Änderung von dem Ausgangswert erhalten.

Zur Veranschaulichung des Grundkonzepts der vorliegenden Erfindung wird im Folgenden ein kurzes Beispiel gegeben:
Die erwartete zu digitalisierende Amplitude des Messsignals geht beispielsweise von 0,0V bis 1,8V. Während negative Messwerte systembedingt ausgeschlossen werden können, soll zur korrekten Abbildung rauschbehafteter Signale das Messsignal in einem Bereich von 0,0V bis 2,0V aufgelöst werden. Bei einer angenommenen Auflösung von 8 Bit ergeben sich 256 Schritte von jeweils ca. 8mV Länge zwischen Referenzwerten zur umfassenden Digitalisierung des Messsignals.

Bei einer Abtastfrequenz von beispielsweise 1 MHz steht dieser umfassenden Gesamtheit von 256 Referenzwerten mit einem Abstand von jeweils 8mV beispielsweise lediglich eine maximale Änderung zwischen zwei aufeinanderfolgenden Messwerten von 5mV gegenüber. Ausgehend von einem anhand der Gesamtheit der Referenzwerte digitalisierten Ausgangswert zu einem ersten Zeitpunkt und dem Wissen des verstrichenen Zeitraums bis zu einem nachfolgend zu digitalisierenden Messwert ist es damit nicht notwendig, die Digitalisierung des nachfolgenden Messwerts anhand der Gesamtheit der 256 Referenzwerte vorzunehmen. Vielmehr reicht, je nach Umfang des verstrichenen Zeitraums, lediglich der Abgleich mit einem Bruchteil der Gesamtheit der Referenzwerte bzw. mit Referenzwerten, welche lediglich einen Teilbereich des Gesamtbereichs von 0,0V bis 2,0V abdecken.

Zur Digitalisierung eines unmittelbar auf einen ermittelten Ausgangswert folgenden Messwerts würde es beispielsweise ausreichen, einen Abgleich mit denjenigen Referenzwerten, zwischen welchen der Ausgangswert lag, sowie dem nächstgrößeren und dem nächstkleineren Referenzwert vorzunehmen. Je größer der zeitliche Abstand zwischen dem verwendeten Ausgangswert und dem nachfolgend zu digitalisierenden Messwert, desto größer ist der abzutastende Bereich. Die Abtastung anhand der Gesamtheit der Referenzwerte ist erst notwendig, wenn der Zeitraum zwischen Ausgangswert und nachfolgend zu digitalisierendem Messwert vergleichsweise groß wird.

Um diesem Sachverhalt geeignet Rechnung zu tragen, kann als Ausgangswert immer der zuletzt gemessene Wert des Messsignals fungieren. Dies erlaubt es den Zeitraum zwischen dem Ausgangswert und dem nachfolgend zu digitalisierenden Messwert minimal zu halten und damit auch die maximal zulässige Änderung des Messwerts zu minimieren.

Die hierdurch eingesparte Zeit zur Digitalisierung der nachfolgenden Messwerte kann beispielsweise zur Erhöhung der Abtastfrequenz (also der zeitlichen Auflösung) und/oder zur Erhöhung der Dichte der Referenzwerte (also der räumlichen Auflösung) verwendet werden.

Wieder bezugnehmend auf das obige Anschauungsbeispiel würde der Wert von 0,0V einem Minimalwert und der Wert von 2,0V einem Maximalwert entsprechen. Eine Berücksichtigung dieser beiden Werte erlaubt in den Randbereichen der zu erwartenden Amplitude des Messsignals eine Beschränkung des Bereichs für Referenzwerte zur effizienten Digitalisierung. Ausgehend von einem Ausgangswert von beispielsweise 0,0V kann ein sich rechnerisch ergebender Abtastbereich von - 0,8mV bis 0,8mV vor dem Hintergrund des Minimalwerts von 0,0V auf den Bereich von 0,0V bis 0,8mV eingeschränkt werden. Der Minimalwert und/oder der Maximalwert können entweder direkt in der Spezifizierungseinheit abgelegt sein oder durch diese von einer anderen Einheit beziehbar sein.

Zur Identifizierung und ggf. Korrektur eines systematischen Fehlers kann es sinnvoll sein, in einem bestimmten Rhythmus die Gesamtheit der zur umfassenden Digitalisierung notwendigen Referenzwerte zur Digitalisierung eines Messwerts zu verwenden. Dafür wird konkret der obere Grenzwert auf den Maximalwert gesetzt, während der untere Grenzwert auf den Minimalwert gesetzt wird. Dies ermöglicht eine Rekalibrierung der Digitalisierung und ggf. die Erkennung und Beseitigung systematischer Fehler.

Wie bereits oben angedeutet ergibt es zur umfassenden Digitalisierung Sinn, den Maximalwert und/oder den Minimalwert derart zu wählen, dass diese nicht unmittelbar mit den zu erwartenden Grenzwerten des Messsignals zusammenfallen, sondern diese umfassen. So können Rauscheffekte oder andere Störungen sicher abgebildet werden.

Die schließlich zur Digitalisierung nachfolgender Messwerte verwendeten Referenzwerte können dieselbe Dichte, also den selben Abstand voneinander, aufweisen, wie die Referenzwerte der Gesamtheit der zur Digitalisierung notwendigen Referenzwerte. Dies ermöglicht es, die freiwerdende Zeit einzusparen oder zur Erhöhung der Abtastfrequenz einzusetzen.

Es kann jedoch auch sinnvoll sein, die Dichte der Referenzwerte zur Digitalisierung der nachfolgenden Messwerte zu erhöhen bzw. den Abstand der Referenzwerte zur Digitalisierung der nachfolgenden Messwerte zu verringern, um die räumliche Auflösung der Vorrichtung zu erhöhen (durch eine feiner Auflösung der Amplitude). Bei gleichbleibender Abtastfrequenz (also zeitlicher Auflösung) könnte dabei die Dichte der Referenzwerte innerhalb des identifizierten Bereichs von Referenzwerten zur effizienten Digitalisierung derart erhöht werden, dass jeder nachfolgende Messwert mit der selben Anzahl von Referenzwerten abgeglichen wird, wie bei einer umfassenden Digitalisierung (also im obigen Beispiel mit 256 Referenzwerten). Dies ermöglicht eine erhebliche Erhöhung der räumlichen Auflösung.

Natürlich können die drei Möglichkeiten der Einsparung von Zeit, der Erhöhung der zeitlichen Auflösung und der Erhöhung der räumlichen Auflösung beliebig miteinander kombiniert werden.

Die Identifizierung des oberen Grenzwerts und/oder des unteren Grenzwerts kann durch die Spezifizierungseinheit insbesondere in einem mehrschrittigen Verfahren erfolgen. Auch erfolgt bevorzugt eine dynamische Aktualisierung des Bereichs von zur Digitalisierung der nachfolgenden Messwerte zu verwendenden Referenzwerten. Zur Identifizierung des Bereichs werden insbesondere auch Positions-, Richtungs-, Geschwindigkeits- und/oder Beschleunigungswerte zur Relativbewegung zwischen den beiden Teilen 14 und 18 verwendet.

Um das digitalisierte Signal auf systematische Fehler, wie ein Driften, hin überwachen zu können, ist bevorzugt eine Überwachungseinheit (nicht explizit gezeigt) vorgesehen (ggf. als Teil der Auswerteinheit 24). Diese Überwachungseinheit kann dann beispielsweise ein entsprechendes Warnsignal ausgeben und/oder die Spezifizierungseinheit mit einem entsprechenden Korrektursignal versorgen, sobald aus den digitalisierten Messwerten auf einen entsprechenden Fehler geschlossen wird.

Es versteht sich, dass die hier beschriebene Vorrichtung 10 alternativ zu optischen Sensoren 20-1 bis 20-8 und einer optischen Codierung 12 auch mittels magnetischer, kapazitiver oder induktiver Sensoren sowie einer entsprechenden Codierung 12 ausgebildet werden kann. Auch ergeben sich für einen Fachmann eine Vielzahl an Modifikationen und Abweichungen von den beschriebenen Ausführungsbeispielen, welche hier wohl nicht explizit beschrieben sind, aber dennoch unter den Schutzumfang der Ansprüche fallen.

Abschließen sei noch darauf hingewiesen, dass die vorliegende Erfindung auch ein entsprechendes Verfahren zur Positions-, Längen, oder Winkelbestimmung betrifft.

### Bezugszeichenliste

- 10: Vorrichtung zur Positions-, Längen-, oder Winkelbestimmung
- 12: Codierung
- 14: erster Teil
- 16: Auslesevorrichtung
- 18: zweiter Teil
- 20-1 bis 20-8: Sensoren
- 22-0 bis 22-9: Codeabschnitte
- 24: Auswerteinheit
- 28-1 bis 28-8: Analog-Digital-Umsetzer

## Patentansprüche

1. Vorrichtung (10) zur Positions-, Längen-, oder Winkelbestimmung, umfassend:
- einen ersten und einen zweiten Teil (14, 18), welche relativ zueinander bewegbar sind;
- eine an dem ersten Teil (14) angebrachte Codierung (12) mit einer Vielzahl von Codeabschnitten (22) erster und zweiter Art;
- eine an dem zweiten Teil (18) angebrachte Auslesevorrichtung (16) zur Erfassung zumindest eines Teils der Codierung (12), wobei die Auslesevorrichtung (16) mehrere Sensoren (20-1 bis 20-8) umfasst, welche jeweils zur Erfassung der einzelnen Codeabschnitte (22-0 bis 22-9) und zur Ausgabe eines entsprechenden analogen Messsignals ausgebildet sind;
- wenigstens einen Analog-Digital-Umsetzer ( 28-1 bis 28-8), welcher dazu ausgebildet ist, die Messsignale von wenigstens einem der Sensoren (20-1 bis 20-8) anhand eines Abgleichs einzelner Messwerte des Messsignals mit einer Mehrzahl von unterschiedlichen Referenzwerten, insbesondere einer einzelnen Art zu digitalisieren;
- eine Auswerteinheit (24), welche dazu ausgebildet ist, aus den digitalisierten Messsignalen eine Relativposition zwischen dem ersten und dem zweiten Teil (14, 18) zu ermitteln; und
- wenigstens eine Spezifizierungseinheit, welche dazu ausgebildet ist, anhand eines zuvor gemessenen Ausgangswerts des zu digitalisierenden Messsignals ein Spezifizierungssignal, welches einen Bereich für zur nachfolgenden Digitalisierung des Messsignals zu verwendenden Referenzwerten anzeigt, zu erzeugen und an den Analog-Digital-Umsetzer ( 28-1 bis 28-8) auszugeben;
wobei der Analog-Digital-Umsetzer ( 28-1 bis 28-8) dazu ausgebildet ist, die Digitalisierung des wenigstens einen Messsignals, zumindest in einem ersten Schritt, insbesondere vollumfänglich, lediglich anhand von Referenzwerten vorzunehmen, welche zwischen einem unteren Grenzwert und einem oberen Grenzwert des Bereichs für zur nachfolgenden Digitalisierung des Messsignals zu verwendenden Referenzwerten liegen;
**dadurch gekennzeichnet, dass**
die Spezifizierungseinheit dazu ausgebildet ist, den oberen Grenzwert des Bereichs von Referenzwerten für die Digitalisierung zu identifizieren, indem sie einen Wert der maximal zulässigen Änderung des jeweiligen Messwerts innerhalb der seit dem Zeitpunkt der Ermittlung des Ausgangswerts verstrichenen Zeit zu dem gemessenen Ausgangswert addiert; und/oder
die Spezifizierungseinheit dazu ausgebildet ist, den unteren Grenzwert des Bereichs von Referenzwerten für die Digitalisierung zu identifizieren, indem sie einen Wert der maximal zulässigen Änderung des jeweiligen Messwerts innerhalb der seit dem Zeitpunkt der Ermittlung des Ausgangswerts verstrichenen Zeit von dem gemessenen Ausgangswert subtrahiert;
wobei die Spezifizierungseinheit insbesondere dazu ausgebildet ist, den Wert der maximal zulässigen Änderung des jeweiligen Messwerts aus spezifischen Eigenschaften, wie einer maximalen Bewegungsgeschwindigkeit und/oder einer maximalen Beschleunigung, der beiden Teile (14, 18) relativ zu einander, zu ermitteln.

2. Vorrichtung (10) nach dem vorhergehenden Anspruch 1,
**dadurch gekennzeichnet, dass**
die Spezifizierungseinheit dazu ausgebildet ist, anhand des Ausgangswerts eine Auswahl von Referenzwerten für die Digitalisierung zu identifizieren und in Gestalt des Spezifizierungssignals auszugeben, während der Analog-Digital-Umsetzer ( 28-1 bis 28-8) dazu ausgebildet ist, das erhaltene Spezifizierungssignal direkt mit dem wenigstens einen Messsignal abzugleichen.

3. Vorrichtung (10) nach dem vorhergehenden Anspruch 1,
**dadurch gekennzeichnet, dass**
die Spezifizierungseinheit dazu ausgebildet ist, das Spezifizierungssignal derart zu erzeugen, dass dieses lediglich mittelbar den Bereich von Referenzwerten für die Digitalisierung des wenigstens einen Messsignals anzeigt, während der Analog-Digital-Umsetzer ( 28-1 bis 28-8) dazu ausgebildet ist, aus dem erhaltenen Spezifizierungssignal auf den hierdurch angezeigten Bereich für zur nachfolgenden Digitalisierung des Messsignals zu verwendenden Referenzwerten zu schließen und die Digitalisierung des wenigstens einen Messsignals zunächst lediglich anhand von Referenzwerten aus diesem Bereich vorzunehmen.

4. Vorrichtung (10) nach einem der vorhergehenden Ansprüche,
**dadurch gekennzeichnet, dass**
als zuvor gemessener Ausgangswert immer der zuletzt gemessene Wert des Messsignals dient.

5. Vorrichtung (10) nach einem der vorhergehenden Ansprüche,
**dadurch gekennzeichnet, dass**
in der Spezifizierungseinheit ein Maximalwert und/oder ein Minimalwert abgelegt ist, oder die Spezifizierungseinheit einen Maximalwert und/oder einen Minimalwert von einer anderen Einheit abrufen kann,
wobei der Maximalwert und/oder der Minimalwert eine absolute Obergrenze bzw. eine absolute Untergrenze für zulässige Referenzwerte definiert,
wobei die Spezifizierungseinheit dazu ausgebildet ist, den besagten Maximalwert und/oder den besagten Minimalwert bei der Ermittlung des oberen Grenzwerts und/oder des unteren Grenzwerts für den Bereich der Referenzwerte für die Digitalisierung zu berücksichtigen.

6. Vorrichtung (10) nach dem vorhergehenden Anspruch 5,
**dadurch gekennzeichnet, dass**
die Spezifizierungseinheit dazu ausgebildet ist, in einem vorgegebenen Rhythmus den oberen Grenzwert und den unteren Grenzwert für den Bereich der Referenzwerte für die Digitalisierung vorübergehend auf den Maximalwert und den Minimalwert zu setzen, um einen Drift in den Werten des Messsignals identifizieren und nachfolgend korrigieren zu können.

7. Vorrichtung (10) nach einem der vorangehenden Ansprüche 5 und 6,
**dadurch gekennzeichnet, dass**
der Maximalwert oberhalb des größten zu erwartenden Werts des zu digitalisierenden Messsignals liegt, und/oder der Minimalwert unterhalb des kleinsten zu erwartenden Werts des zu digitalisierenden Messsignals liegt.

8. Vorrichtung (10) nach einem der vorhergehenden Ansprüche,
**dadurch gekennzeichnet, dass**
der Analog-Digital-Umsetzer ( 28-1 bis 28-8) dazu ausgebildet ist, die Digitalisierung des Messsignals anhand von Referenzwerten aus dem identifizierten Bereich vorzunehmen, welche jeweils den selben Abstand voneinander aufweisen, wie Referenzwerte bei einer entsprechenden Digitalisierung ohne Beschränkung des Bereichs für die Referenzwerte.

9. Vorrichtung (10) nach einem der vorhergehenden Ansprüche 1 bis 7,
**dadurch gekennzeichnet, dass**
der Analog-Digital-Umsetzer ( 28-1 bis 28-8) dazu ausgebildet ist, die Digitalisierung anhand von Referenzwerten aus dem identifizierten Bereich vorzunehmen, welche einen kleineren Abstand voneinander aufweisen, als Referenzwerte bei einer entsprechenden Digitalisierung ohne Beschränkung des Bereichs für die Referenzwerte,
wobei der Abstand zwischen entsprechenden Referenzwerten insbesondere derart verringert ist, dass die Zahl der zur Digitalisierung verwendeten Referenzwerte aus dem beschränkten Bereich der Zahl von zur Digitalisierung verwendeten Referenzwerten ohne Beschränkung entspricht.

10. Vorrichtung (10) nach einem der vorhergehenden Ansprüche,
**dadurch gekennzeichnet, dass**
eine Überwachungseinheit vorgesehen ist, welche das digitalisierte Signal auf ein Driften hin überwacht und bei Erkennung eines solchen Driftens hin ein Warnsignal ausgibt und/oder die Spezifizierungseinheit mit einem Signal zur Korrektur dieses Driftens versorgt.

11. Vorrichtung (10) nach einem der vorhergehenden Ansprüche,
**dadurch gekennzeichnet, dass**
die Spezifizierungseinheit dazu ausgebildet ist, den unteren Grenzwert und/oder den oberen Grenzwert für den Bereich der Referenzwerte für die Digitalisierung mittels einer Mehrzahl von Zwischenschritten zu ermitteln.

12. Vorrichtung (10) nach einem der vorhergehenden Ansprüche,
**dadurch gekennzeichnet, dass**
die Spezifizierungseinheit dazu ausgebildet ist, den Bereich der für die Digitalisierung zu verwendenden Referenzwerte dynamisch anzupassen bzw. zu aktualisieren.

13. Vorrichtung (10) nach einem der vorhergehenden Ansprüche,
**dadurch gekennzeichnet, dass**
die Spezifizierungseinheit dazu ausgebildet ist, den Bereich der für die Digitalisierung zu verwendenden Referenzwerten unter Berücksichtigung von ermittelten Positions-, Richtungs-, Geschwindigkeits- und/oder Beschleunigungswerten zur Relativbewegung zwischen dem ersten und dem zweiten Teil (14, 18) zu bestimmen.

14. Verfahren zur Positions-, Längen-, oder Winkelbestimmung, insbesondere mittels einer Vorrichtung (10) nach einem der vorhergehenden Ansprüche, wobei das Verfahren umfasst:
Bewegung eines ersten Teils (14) und eines zweiten Teils (18) relativ zueinander;
Erfassung zumindest eines Teils einer an dem ersten Teil (14) angebrachten Codierung (12) mittels mehrerer Sensoren (20-1 bis 20-8) einer an dem zweiten Teil (18) angebrachten Auslesevorrichtung (16), und Ausgabe entsprechender analoger Messsignale;
Digitalisierung des Messsignals mindestens eines der Sensoren (20-1 bis 20-8) anhand eines Abgleichs einzelner Messwerte des Messsignals mit einer Mehrzahl von unterschiedlichen Referenzwerten, insbesondere einer einzelnen Art;
Ermittlung einer Relativposition zwischen dem ersten und dem zweiten Teil (14, 18) aus den digitalisierten Messsignalen; und
Erzeugung eines Spezifizierungssignals, welches einen Bereich für zur nachfolgenden Digitalisierung des Messsignals zu verwendenden Referenzwerten anzeigt, anhand eines zuvor gemessenen Ausgangswerts des zu digitalisierenden Messsignals;
wobei die nachfolgende Digitalisierung des wenigstens einen Messsignals, zumindest in einem ersten Schritt, insbesondere vollumfänglich, lediglich anhand von Referenzwerten vorgenommen wird, welche zwischen einem unteren Grenzwert und einem oberen Grenzwert des identifizierten Bereichs liegen;
**gekennzeichnet durch**
die Identifizierung des oberen Grenzwerts des Bereichs von Referenzwerten für die Digitalisierung, indem ein Wert der maximal zulässigen Änderung des jeweiligen Messwerts innerhalb der seit dem Zeitpunkt der Ermittlung des Ausgangswerts verstrichenen Zeit zu dem gemessenen Ausgangswert addiert wird; und/oder
die Identifizierung des unteren Grenzwerts des Bereichs von Referenzwerten für die Digitalisierung, indem ein Wert der maximal zulässigen Änderung des jeweiligen Messwerts innerhalb der seit dem Zeitpunkt der Ermittlung des Ausgangswerts verstrichenen Zeit von dem gemessenen Ausgangswert subtrahiert wird;
wobei der Wert der maximal zulässigen Änderung des jeweiligen Messwerts aus spezifischen Eigenschaften, wie einer maximalen Bewegungsgeschwindigkeit und/oder einer maximalen Beschleunigung, der beiden Teile (14, 18) relativ zu einander, ermittelt wird.

## Claims

1. An apparatus (10) for position, length or angle determination, comprising:
- a first and a second part (14, 18) which are movable relative to one another;
- a coding (12) which is applied to the first part (14) and which has a plurality of code sections (22) of a first and a second kind;
- a readout apparatus (16), which is attached to the second part (18), for detecting at least one part of the coding (12), wherein the readout apparatus (16) comprises a plurality of sensors (20-1 to 20-8) which are each configured to detect the individual code sections (22-0 to 22-9) and to output a corresponding analog measurement signal;
- at least one analog-to-digital converter (28-1 to 28-8) which is configured to digitize the measurement signals of at least one of the sensors (20-1 to 20-8) based on a comparison of individual measurement values of the measurement signal with a plurality of different reference values, in particular of a single kind;
- an evaluation unit (24) which is configured to determine a relative position between the first and the second part (14, 18) from the digitized measurement signals; and
- at least one specification unit which is configured, based on a previously measured output value of the measurement signal to be digitized, to generate a specification signal, which indicates a range for reference values to be used for the subsequent digitization of the measurement signal, and to transmit it to the analog-to-digital converter (28-1 to 28-8);
wherein the analog-to-digital converter (28-1 to 28-8) is configured to perform the digitization of the at least one measurement signal, at least in a first step, in particular completely, solely based on reference values which lie between a lower limit value and an upper limit value of the range for reference values to be used for the subsequent digitization of the measurement signal,
**characterized in that**
the specification unit is configured to identify the upper limit value of the range of reference values for the digitization by adding, to the measured output value, a value of the maximum permissible change of the respective measurement value within the time elapsed since the point in time of the determination of the output value; and/or
the specification unit is configured to identify the lower limit value of the range of reference values for the digitization by subtracting, from the measured output value, a value of the maximum permissible change of the respective measurement value within the time elapsed since the point in time of the determination of the output value;
wherein the specification unit is in particular configured to determine the value of the maximum permissible change of the respective measurement value from specific properties, such as a maximum speed of movement and/or a maximum acceleration, of the two parts (14, 18) relative to one another.

2. An apparatus (10) according to the preceding claim 1,
**characterized in that**
the specification unit is configured, based on the output value, to identify a selection of reference values for the digitization and to output them in the form of the specification signal, while the analog-to-digital converter (28-1 to 28-8) is configured to compare the obtained specification signal directly with the at least one measurement signal.

3. An apparatus (10) according to the preceding claim 1,
**characterized in that**
the specification unit is configured to generate the specification signal such that it only indirectly indicates the range of reference values for the digitization of the at least one measurement signal, while the analog-to-digital converter (28-1 to 28-8) is configured to infer, from the obtained specification signal, the hereby indicated range for reference values to be used for the subsequent digitization of the measurement signal and to initially perform the digitization of the at least one measurement signal solely based on reference values from this range.

4. An apparatus (10) according to any one of the preceding claims,
**characterized in that**
the last measured value of the measurement signal always serves as the previously measured output value.

5. An apparatus (10) according to any one of the preceding claims,
**characterized in that**
a maximum value and/or a minimum value is/are stored in the specification unit, or the specification unit can retrieve a maximum value and/or a minimum value from another unit,
wherein the maximum value and/or the minimum value defines/define an absolute upper limit value or an absolute lower limit value for permissible reference values,
wherein the specification unit is configured to take said maximum value and/or said minimum value into account when determining the upper limit value and/or the lower limit value for the range of the reference values for the digitization.

6. An apparatus (10) according to the preceding claim 5,
**characterized in that**
the specification unit is configured, in a predefined rhythm, to temporarily set the upper limit value and the lower limit value for the range of the reference values for the digitization to the maximum value and the minimum value to be able to identify and subsequently correct a drift in the values of the measurement signal.

7. An apparatus (10) according to one of the preceding claims 5 and 6,
**characterized in that**
the maximum value lies above the largest expected value of the measurement signal to be digitized and/or the minimum value lies below the smallest expected value of the measurement signal to be digitized.

8. An apparatus (10) according to any one of the preceding claims,
**characterized in that**
the analog-to-digital converter (28-1 to 28-8) is configured to perform the digitization of the measurement signal based on reference values from the identified range that each have the same distance from one another as reference values in a corresponding digitization without restricting the range for the reference values.

9. An apparatus (10) according to any one of the preceding claims 1 to 7,
**characterized in that**
the analog-to-digital converter (28-1 to 28-8) is configured to carry out the digitization based on reference values from the identified range that have a smaller distance from one another than reference values in a corresponding digitization without restricting the range for the reference values,
wherein the distance between corresponding reference values is in particular reduced such that the number of reference values used for the digitization from the restricted range corresponds to the number of reference values used for the digitization without restriction.

10. An apparatus (10) according to any one of the preceding claims,
**characterized in that**
a monitoring unit is provided that monitors the digitized signal for a drifting and, when such a drifting is recognized, outputs a warning signal and/or supplies the specification unit with a signal to correct this drifting.

11. An apparatus (10) according to any one of the preceding claims,
**characterized in that**
the specification unit is configured to determine the lower limit value and/or
the upper limit value for the range of the reference values for the digitization by means of a plurality of intermediate steps.

12. An apparatus (10) according to any one of the preceding claims,
**characterized in that**
the specification unit is configured to dynamically adapt or update the range of the reference values to be used for the digitization.

13. An apparatus (10) according to any one of the preceding claims,
**characterized in that**
the specification unit is configured to determine the range of the reference values to be used for the digitization, taking into account determined position values, direction values, speed values and/or acceleration values for the relative movement between the first and the second part (14, 18).

14. A method for position, length or angle determination, in particular by means of an apparatus (10) according to any one of the preceding claims, wherein the method comprises:
moving a first part (14) and a second part (18) relative to one another;
detecting at least one part of a coding (12) applied to the first part (14) by means of a plurality of sensors (20-1 to 20-8) of a readout apparatus (16) attached to the second part (18), and outputting corresponding analog measurement signals;
digitizing the measurement signal of at least one of the sensors (20-1 to 20-8) based on a comparison of individual measurement values of the measurement signal with a plurality of different reference values, in particular of a single kind;
determining a relative position between the first and the second part (14, 18) from the digitized measurement signals; and
generating a specification signal, which indicates a range for reference values to be used for the subsequent digitization of the measurement signal, based on a previously measured output value of the measurement signal to be digitized;
wherein the subsequent digitization of the at least one measurement signal, at least in a first step, in particular completely, is performed solely based on reference values which lie between a lower limit value and an upper limit value of the identified range,
**characterized by**
the identification of the upper limit of the range of reference values for the digitization by adding, to the measured output value, a value of the maximum permissible change of the respective measurement value within the time elapsed since the point in time of the determination of the output value; and/or
the identification of the lower limit value of the range of reference values for the digitization by subtracting, from the measured output value, a value of the maximum permissible change of the respective measurement value within the time elapsed since the point in time of the determination of the output value;
wherein the value of the maximum permissible change of the respective measurement value is determined from specific properties, such as a maximum speed of movement and/or a maximum acceleration, of the two parts (14, 18) relative to one another.

## Revendications

1. Dispositif (10) de détermination de la position, de la longueur ou de l'angle, comprenant :
- une première et une seconde partie (14, 18), qui sont mobiles l'une par rapport à l'autre,
- un codage (12) fixé à la première partie (14) et comportant une pluralité de sections de code (22) d'un premier et d'un second type ;
- un dispositif de lecture (16) fixé à la seconde partie (18) et destiné à détecter au moins une partie du codage (12), le dispositif de lecture (16) comprenant plusieurs capteurs (20-1 à 20-8) qui sont chacun conçus pour détecter les sections de code individuelles (22-0 à 22-9) et pour émettre un signal de mesure analogique correspondant ;
- au moins un convertisseur analogique-numérique (28-1 à 28-8) conçu pour numériser les signaux de mesure de l'un au moins des capteurs (20-1 à 20-8) à l'aide d'une comparaison de valeurs de mesure individuelles du signal de mesure avec une pluralité de valeurs de référence différentes, en particulier d'un seul type ;
- une unité d'évaluation (24) conçue pour déterminer, à partir des signaux de mesure numérisés, une position relative entre la première et la seconde partie (14, 18) ; et
- au moins une unité de spécification conçue pour générer, à partir d'une valeur initiale mesurée préalablement du signal de mesure à numériser, un signal de spécification qui indique une plage de valeurs de référence à utiliser pour la numérisation suivante du signal de mesure, et pour le transmettre au convertisseur analogique-numérique (28-1 à 28-8) ;
le convertisseur analogique-numérique (28-1 à 28-8) étant conçu pour effectuer la numérisation dudit au moins un signal de mesure, au moins dans une première étape, en particulier dans son intégralité, uniquement à partir des valeurs de référence qui sont comprises entre une valeur limite inférieure et une valeur limite supérieure de la plage de valeurs de référence à utiliser pour la numérisation suivante du signal de mesure ;
**caractérisé en ce que**
l'unité de spécification est conçue pour identifier la valeur limite supérieure de la plage de valeurs de référence pour la numérisation en ajoutant à la valeur initiale mesurée une valeur de la variation maximale admissible de la valeur de mesure respective pendant le temps écoulé depuis la détermination de la valeur initiale ; et/ou
l'unité de spécification est conçue pour identifier la valeur limite inférieure de la plage de valeurs de référence pour la numérisation en soustrayant de la valeur initiale mesurée une valeur de la variation maximale admissible de la valeur de mesure respective pendant le temps écoulé depuis la détermination de la valeur initiale ;
en particulier, l'unité de spécification étant conçue pour déterminer la valeur de la variation maximale admissible de la valeur de mesure respective à partir de caractéristiques spécifiques, telles qu'une vitesse de mouvement maximale et/ou une accélération maximale, des deux parties (14, 18) l'une par rapport à l'autre.

2. Dispositif (10) selon la revendication précédente 1,
**caractérisé en ce que**
l'unité de spécification est conçue pour identifier, à l'aide de la valeur initiale, une sélection des valeurs de référence pour la numérisation et pour l'émettre sous la forme du signal de spécification, tandis que le convertisseur analogique-numérique (28-1 à 28-8) est conçu pour comparer directement le signal de spécification obtenu avec ledit au moins un signal de mesure.

3. Dispositif (10) selon la revendication précédente 1,
**caractérisé en ce que**
l'unité de spécification est conçue pour générer le signal de spécification de telle sorte que celui-ci n'indique qu'indirectement la plage de valeurs de référence pour la numérisation dudit au moins un signal de mesure, tandis que le convertisseur analogique-numérique (28-1 à 28-8) est conçu pour conclure, à partir du signal de spécification obtenu, à la plage ainsi indiquée des valeurs de référence à utiliser pour la numérisation suivante du signal de mesure et pour effectuer la numérisation dudit au moins un signal de mesure dans un premier temps uniquement à l'aide des valeurs de référence de cette plage.

4. Dispositif (10) selon l'une des revendications précédentes,
**caractérisé en ce que**
la valeur initiale mesurée préalablement est toujours la dernière valeur mesurée du signal de mesure.

5. Dispositif (10) selon l'une des revendications précédentes,
**caractérisé en ce que**
une valeur maximale et/ou une valeur minimale est stockée dans l'unité de spécification, ou l'unité de spécification peut récupérer une valeur maximale et/ou une valeur minimale auprès d'une autre unité,
la valeur maximale et/ou la valeur minimale définissant respectivement une limite supérieure absolue et une limite inférieure absolue pour les valeurs de référence admissibles,
l'unité de spécification étant conçue pour prendre en compte ladite valeur maximale et/ou ladite valeur minimale lors de la détermination de la valeur limite supérieure et/ou de la valeur limite inférieure de la plage de valeurs de référence pour la numérisation.

6. Dispositif (10) selon la revendication précédente 5,
**caractérisé en ce que**
l'unité de spécification est conçue pour fixer temporairement, selon un rythme prédéfini, la valeur limite supérieure et la valeur limite inférieure de la plage de valeurs de référence pour la numérisation à la valeur maximale et à la valeur minimale afin de pouvoir identifier et corriger ultérieurement toute dérive des valeurs du signal de mesure.

7. Dispositif (10) selon l'une des revendications précédentes 5 et 6,
**caractérisé en ce que**
la valeur maximale est supérieure à la plus grande valeur attendue du signal de mesure à numériser, et/ou la valeur minimale est inférieure à la plus petite valeur attendue du signal de mesure à numériser.

8. Dispositif (10) selon l'une des revendications précédentes,
**caractérisé en ce que**
le convertisseur analogique-numérique (28-1 à 28-8) est conçue pour effectuer la numérisation du signal de mesure à l'aide de valeurs de référence appartenant à la plage identifiée, lesquelles ont chacune le même intervalle que les valeurs de référence d'une numérisation correspondante sans restriction de la plage de valeurs de référence.

9. Dispositif (10) selon l'une des revendications précédentes 1 à 7,
**caractérisé en ce que**
le convertisseur analogique-numérique (28-1 à 28-8) est conçu pour effectuer la numérisation à l'aide de valeurs de référence appartenant à la plage identifiée, lesquelles ont un intervalle inférieur à celui des valeurs de référence d'une numérisation correspondante sans restriction de la plage de valeurs de référence,
en particulier, l'intervalle entre les valeurs de référence correspondantes est réduit de telle sorte que le nombre de valeurs de référence utilisées pour la numérisation et appartenant à la plage restreinte corresponde au nombre de valeurs de référence utilisées pour la numérisation et dépourvues de restriction.

10. Dispositif (10) selon l'une des revendications précédentes,
**caractérisé en ce que**
il est prévu une unité de surveillance qui surveille le signal numérisé quant à une dérive et qui, en cas de détection d'une telle dérive, émet un signal d'avertissement et/ou fournit à l'unité de spécification un signal de correction de cette dérive.

11. Dispositif (10) selon l'une des revendications précédentes,
**caractérisé en ce que**
l'unité de spécification est conçue pour déterminer la valeur limite inférieure et/ou la valeur limite supérieure de la plage de valeurs de référence pour la numérisation par une pluralité d'étapes intermédiaires.

12. Dispositif (10) selon l'une des revendications précédentes,
**caractérisé en ce que**
l'unité de spécification est conçue pour ajuster ou mettre à jour dynamiquement la plage de valeurs de référence à utiliser pour la numérisation.

13. Dispositif (10) selon l'une des revendications précédentes,
**caractérisé en ce que**
l'unité de spécification est conçue pour déterminer la plage de valeurs de référence à utiliser pour la numérisation en prenant en compte les valeurs déterminées de la position, de la direction, de la vitesse et/ou de l'accélération concernant le mouvement relatif entre la première et la seconde partie (14, 18).

14. Procédé de détermination de la position, de la longueur ou de l'angle, en particulier à l'aide d'un dispositif (10) selon l'une des revendications précédentes, le procédé comprenant :
le mouvement d'une première partie (14) et d'une seconde partie (18) l'une par rapport à l'autre ;
la détection d'au moins une partie d'un codage (12) fixé à la première partie (14) au moyen de plusieurs capteurs (20-1 à 20-8) d'un dispositif de lecture (16) fixé à la seconde partie (18), et l'émission de signaux de mesure analogiques correspondants ;
la numérisation du signal de mesure de l'un au moins des capteurs (20-1 à 20-8) à l'aide d'une comparaison des valeurs de mesure individuelles du signal de mesure avec une pluralité de valeurs de référence différentes, en particulier d'un seul type ; et
la détermination d'une position relative entre la première et la seconde partie (14, 18) à partir des signaux de mesure numérisés ; et
la génération, à partir d'une valeur initiale mesurée préalablement du signal de mesure à numériser, d'un signal de spécification qui indique une plage de valeurs de référence à utiliser pour la numérisation suivante du signal de mesure ;
la numérisation suivante dudit au moins un signal de mesure étant effectuée, au moins dans une première étape, en particulier dans son intégralité, uniquement à partir des valeurs de référence qui sont comprises entre une valeur limite inférieure et une valeur limite supérieure de la plage identifiée ;
**caractérisé par**
l'identification de la valeur limite supérieure de la plage de valeurs de référence pour la numérisation en ajoutant à la valeur initiale mesurée une valeur de la variation maximale admissible de la valeur de mesure respective pendant le temps écoulé depuis la détermination de la valeur initiale ; et/ou
l'identification de la valeur limite inférieure de la plage de valeurs de référence pour la numérisation en soustrayant de la valeur initiale mesurée une valeur de la variation maximale admissible de la valeur de mesure respective pendant le temps écoulé depuis la détermination de la valeur initiale ;
la valeur de la variation maximale admissible de la valeur de mesure respective étant déterminée à partir de caractéristiques spécifiques, telles qu'une vitesse de mouvement maximale et/ou une accélération maximale, des deux parties (14, 18) l'une par rapport à l'autre.
